# FASCICULE DE BREVET EUROPEEN

(11) **EP 0 591 013 B1**
(45) Date de publication et mention de la délivrance du brevet: **28.05.1997**
(21) Numéro de dépôt: 93402118.9
(22) Date de dépôt: 30.08.1993
(51) Int. Cl.: B62D 1/18

(54) **Dispositif de commande d'un cycle d'activation d'un actionneur et ensemble de colonne de direction comportant un tel dispositif**
Steuervorrichtung für einen Betätigungsvorrichtungszyklus und Lenksäuleneinheit mit einer solchen Vorrichtung
Control device for an activation device-cycle and steering column unit comprising such a device

(30) Priorité: 29.09.1992 FR 9211616
(43) Date de publication de la demande: 06.04.1994
(73) Titulaire: ECIA - EQUIPEMENTS ET COMPOSANTS POUR L'INDUSTRIE AUTOMOBILE, F-25400 Audincourt (FR)
(72) Inventeur: Peugeot, Michel, F-25230 Seloncourt (FR); Benkhelifa, Nacer, F-25400 Audincourt (FR)
(74) Mandataire: Habasque, Etienne Joel Jean-François

(56) Documents cités:
- DE-A- 3 705 018
- US-A- 2 769 351
- US-A- 3 566 703

## Description

La présente invention concerne un dispositif de commande d'un cycle d'activation d'un actionneur et un ensemble de colonne de direction réglable en position pour véhicule automobile, comportant un tel dispositif.

Plus particulièrement, l'invention se rapporte aux dispositifs de commande du type comportant un organe de déclenchement du cycle et un organe de fin de course, associé à l'actionneur et déplaçable entre une position ouverte d'arrêt du cycle et une position fermée de poursuite du cycle et des moyens d'alimentation de l'actionneur, dont le fonctionnement est commandé par lesdits organes.

De manière générale, l'organe de déclenchement du cycle et l'organe de fin de course sont connectés en parallèle à une borne d'un relais d'actionnement d'un interrupteur d'alimentation de l'actionneur.

On conçoit alors que, lorsqu'un utilisateur actionne l'organe de déclenchement du cycle, le relais est alimenté et ferme l'interrupteur de sorte que l'actionneur est alimenté.

Cette alimentation de l'actionneur provoque un déplacement de celui-ci, qui libère l'organe de fin de course et celui-ci se déplace alors de sa position ouverte d'arrêt du cycle vers sa position fermée de poursuite du cycle par alimentation du relais.

Le cycle se poursuit alors normalement jusqu'à ce que l'actionneur vienne à nouveau manoeuvrer l'organe de fin de course et le déplace de sa position fermée de poursuite du cycle vers sa position ouverte d'arrêt du cycle par coupure de l'alimentation du relais.

Cependant, ces dispositifs présentent un certain nombre d'inconvénients car l'action sur l'organe de déclenchement du cycle peut être trop brève pour permettre à l'actionneur de libérer l'organe de fin de course, de sorte que cet organe de fin de course ne peut alimenter le relais et qu'il est alors nécessaire d'actionner à nouveau l'organe de déclenchement de cycle.

Par ailleurs, si l'utilisateur maintient son action sur l'organe de déclenchement de cycle, le relais est excité en permanence en raison de la mise en court-circuit de l'organe de fin de course.

On conçoit que cette structure et ce fonctionnement peuvent engendrer un certain nombre de problèmes lorsqu'on souhaite obtenir une commande précise d'un cycle d'activation.

Le but de l'invention est donc de résoudre ces problèmes.

A cet effet, l'invention a pour objet un dispositif de commande d'un cycle d'activation d'un actionneur du type comportant un organe à action fugitive de déclenchement du cycle, déplaçable entre une position ouverte de repos et une position fermée de déclenchement du cycle et un organe de fin de course, associé à l'actionneur et déplaçable entre une position ouverte d'arrêt du cycle et une position fermée de poursuite du cycle et des moyens d'alimentation de l'actionneur dont le fonctionnement est commandé par lesdits organes pour assurer l'alimentation ou non de l'actionneur en fonction de l'état de ceux-ci, caractérisé en ce que lesdits moyens d'alimentation comprennent des moyens de déclenchement du cycle associés à l'organe de déclenchement de cycle et comprenant des moyens de court-circuitage de l'organe de fin de course et des moyens d'inhibition des moyens de déclenchement après passage de l'organe de fin de course de sa position ouverte d'arrêt du cycle à sa position fermée de poursuite du cycle, la réinitialisation de ces moyens d'inhibition étant commandée par passage de l'organe de fin de course de sa position fermée de poursuite de cycle à sa position ouverte d'arrêt de cycle et relâchement de l'organe de déclenchement.

Selon un autre aspect, l'invention a également pour objet un ensemble de colonne de direction réglable en position pour véhicule automobile, du type comportant des moyens de blocage de la colonne en position, déplaçables entre une position de verrouillage et une position de déverrouillage par l'intermédiaire d'un moteur électrique dont l'arbre de sortie est relié aux moyens de blocage par des moyens d'actionnement et dont l'alimentation en énergie est pilotée par un organe de commande, caractérisé en ce qu'il comporte un dispositif de commande d'un cycle d'activation du moteur tel que décrit précédemment.

L'invention sera mieux comprise à l'aide de la description qui va suivre donnée uniquement à titre d'exemple et faite en se référant aux dessins annexés sur lesquels :
- la figure 1 représente un schéma électrique d'un dispositif de commande selon l'invention, et
- la figure 2 représente une vue de côté partielle d'un ensemble de colonne de direction comportant des moyens de blocage à moteur électrique dont l'activation est contrôlée par un tel dispositif.

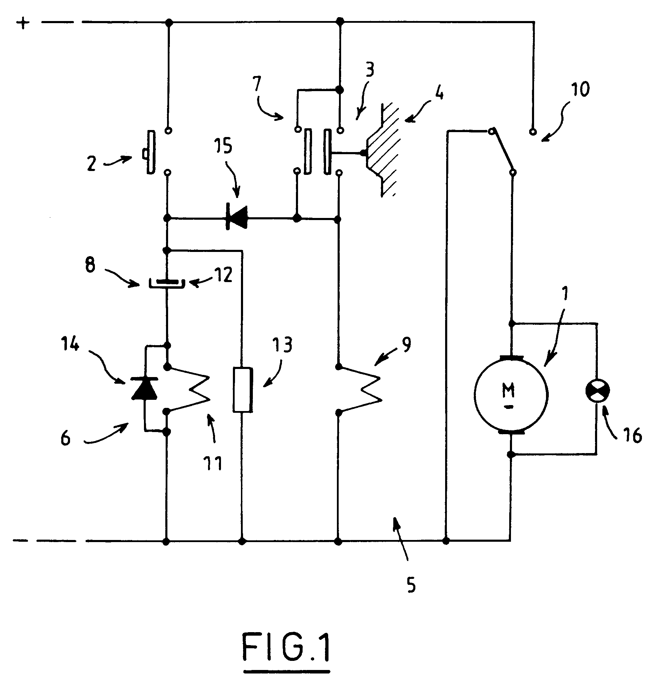

Comme on peut le voir sur la figure 1, un dispositif selon l'invention permet de commander un cycle d'activation d'un actionneur tel qu'un moteur électrique désigné par la référence générale 1 sur cette figure.

Ce dispositif comporte d'une manière connue en soi un organe 2 tel qu'un bouton poussoir de déclenchement du cycle et un organe 3 tel qu'un bouton-poussoir de fin de course, dont la position est contrôlée par exemple par au moins une came 4, associée à l'actionneur.

Cet organe de fin de course est ainsi monté déplaçable entre une position ouverte d'arrêt du cycle et une position fermée de poursuite du cycle.

Par ailleurs, ce dispositif comporte également des moyens d'alimentation de l'actionneur dont le fonctionnement est commandé par lesdits organes.

Ces moyens d'alimentation sont désignés par la référence générale 5 sur cette figure.

Pour résoudre les différents problèmes mentionnés précédemment, le dispositif de commande selon l'invention comporte des moyens de déclenchement du cycle, associés à l'organe de déclenchement et comprenant des moyens de court-circuitage de l'organe de fin de course.

Ces moyens de déclenchement sont désignés par la référence générale 6 sur cette figure tandis que les moyens de court-circuitage sont désignés par la référence 7.

Par ailleurs, il est également prévu des moyens 8 d'inhibition des moyens de déclenchement après passage de l'organe de fin de course 3 de sa position ouverte d'arrêt du cycle à sa position fermée de poursuite du cycle, la réinitialisation de ces moyens d'inhibition 8 étant commandée par passage de l'organe de fin de course de sa position fermée de poursuite du cycle à sa position ouverte d'arrêt du cycle et relâchement de l'organe de déclenchement.

Le fonctionnement de ces moyens sera décrit plus en détail par la suite.

Les moyens d'alimentation 5 peuvent comporter un premier relais, désigné par la référence générale 9, de manoeuvre d'un organe 10 d'alimentation de l'actionneur 1, ce relais 9 étant connecté en série avec l'organe de fin de course 3 et les moyens de court-circuitage 7 de ceux-ci.

Les moyens de déclenchement désignés par la référence générale 6 peuvent également comporter un second relais 11 à auto-alimentation, de manoeuvre des moyens de court-circuitage 7, ce relais 11 étant connecté en série avec l'organe de déclenchement 2.

On notera que l'organe d'alimentation de l'actionneur, désigné par la référence générale 10, peut être constitué par un commutateur à deux positions, l'une d'alimentation de cet actionneur et l'autre de mise en court-circuit de celui-ci pour obtenir un arrêt précis en position de celui-ci.

Les moyens d'inhibition peuvent, quant à eux, comporter un condensateur 12 en série avec le second relais 11 et une résistance de décharge de ce condensateur désignée par la référence générale 13 et connectée en parallèle aux bornes de ce condensateur 12 et du second relais 11.

Par ailleurs, une diode de roue libre 14 peut également être connectée en parallèle sur le second relais 11.

L'une des bornes de ce condensateur d'inhibition 12 est reliée à la borne de sortie de l'organe de déclenchement 2 et à la borne de sortie commune de l'organe de fin de course 3 et des moyens de court-circuitage 7 de ceux-ci, à travers une diode montée en inverse et désignée par la référence générale 15 sur cette figure.

Enfin, on notera qu'un voyant 16 peut être connecté en parallèle aux bornes de l'actionneur pour indiquer l'état d'alimentation de celui-ci.

L'état initial du dispositif est celui représenté sur la figure 1, dans lequel le commutateur 10 est en position de court-circuitage de l'actionneur 1, l'organe de fin de course 3 est en position ouverte d'arrêt du cycle, le condensateur 12 est déchargé et l'organe de déclenchement de cycle 2 n'est pas encore actionné.

Lorsqu'un utilisateur souhaite déclencher un cycle de fonctionnement, il actionne l'organe 2 de déclenchement de cycle pour alimenter le relais 11.

Le condensateur 12 étant complètement déchargé, il se comporte comme un court-circuit, de sorte que le relais 11 est alimenté sous une pleine tension, ce qui provoque la fermeture des moyens de court-circuitage 7.

Ces moyens 7 assurent d'une part l'auto-alimentation de ce second relais 11 à travers la diode 15 et le condensateur 12 et d'autre part l'alimentation du premier relais 9 qui, à son tour, provoque la commutation du commutateur 10 et donc l'alimentation de l'actionneur 1.

Cet actionneur commence alors son cycle de fonctionnement et déplace la came 4 pour que celle-ci libère l'organe de fin de course 3 de sa position ouverte d'arrêt du cycle afin qu'il se déplace vers sa position fermée de poursuite du cycle.

Pendant ce temps, le condensateur 12 se charge et la tension aux bornes de celui-ci augmente tandis que la tension aux bornes du second relais 11 diminue.

On notera que ceci se produit indépendamment de l'état d'actionnement ou de relâchement de l'organe 2 de déclenchement de cycle car celui-ci est court-circuité par les moyens de court-circuitage 7 et l'organe 3 de fin de course à travers la diode 15.

La tension aux bornes du condensateur 12 continuant à croître, il arrive un moment où la tension aux bornes du relais 11 est insuffisante pour maintenir les moyens de court-circuitage 7 fermés de sorte que ceux-ci s'ouvrent.

On conçoit alors que ce relais 11 et ces moyens 7 ont permis de court-circuiter l'organe de fin de course pour provoquer le déclenchement du cycle et ce jusqu'au moment où l'organe de fin de course est passé de sa position ouverte d'arrêt de cycle à sa position fermée de poursuite de cycle.

Une fois cette position de poursuite de cycle atteinte par l'organe de fin de course, les moyens de déclenchement et plus particulièrement le relais 11 sont inhibés par le condensateur 12 du fait de la charge de celui-ci.

Le cycle se poursuivant, la came 4, ou une autre came associée à l'actionneur, revient en face de l'organe de fin de course 3 pour le déplacer de sa position fermée de poursuite de cycle vers sa position ouverte d'arrêt de cycle par coupure de l'alimentation de l'actionneur.

A partir de cet instant, deux situations peuvent être rencontrées.

L'une de ces situations est la situation dans laquelle l'organe 2 de déclenchement de cycle n'est pas actionné par l'utilisateur. Dans ce cas, plus aucune tension n'est appliquée à la borne correspondante du condensateur 12, de sorte que celui-ci peut se décharger à travers la résistance 13 et la diode de roue libre 14. Ceci permet de réinitialiser ces moyens d'inhibition 8 pour la commande d'un cycle d'activation suivant.

Cette commande se fait par un nouvel actionnement de l'organe 2 de déclenchement de cycle par l'utilisateur.

L'autre situation pouvant se présenter est la situation dans laquelle l'utilisateur a maintenu son action sur l'organe 2 de déclenchement de cycle. Dans ce cas, la tension est maintenue à la borne correspondante du condensateur 12, de sorte que celui-ci reste chargé et continue à inhiber le fonctionnement des moyens de déclenchement de cycle, c'est à dire du relais 11. L'organe de fin de course étant dans sa position ouverte d'arrêt du cycle, l'actionneur n'est pas alimenté.

L'utilisateur doit alors relâcher son action sur l'organe 2 de déclenchement de cycle pour permettre la décharge du condensateur 12 à travers la résistance 13 et la diode de roue libre 14, avant de commander un nouveau cycle de fonctionnement par une nouvelle action sur l'organe 2 de déclenchement de cycle.

On conçoit que ce dispositif peut présenter un certain nombre d'avantages, en particulier dans des ensembles de colonne de direction réglable en position, comportant des moyens de blocage en position de celle-ci, déplaçables entre une position de verrouillage et une position de déverrouillage, par l'intermédiaire, par exemple, d'un moteur électrique à un seul sens de rotation, dont l'arbre de sortie est relié à ces moyens de blocage par l'intermédiaire de moyens d'actionnement par exemple à bielle-manivelle.

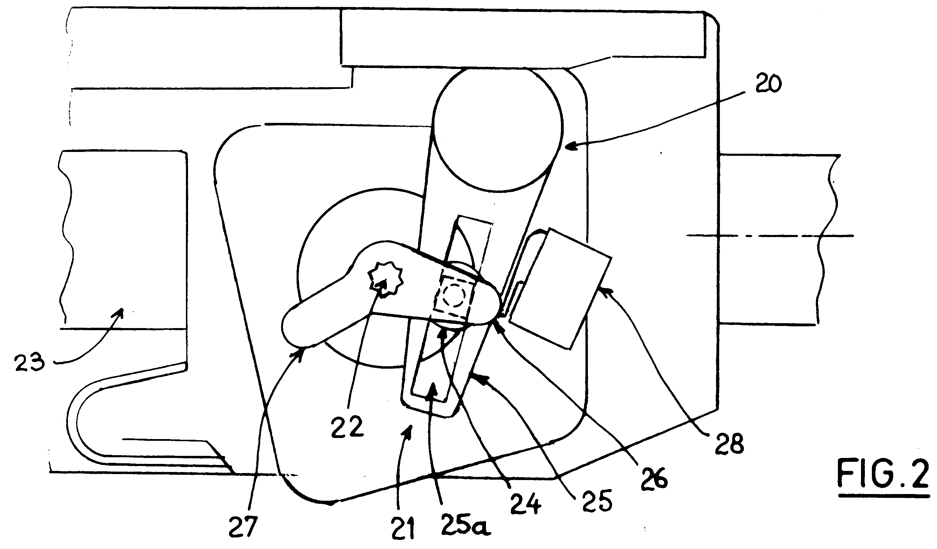

Un exemple d'une telle réalisation est représenté sur la figure 2, sur laquelle on reconnaît une structure de moyens de blocage découlant de celles décrites dans la demande de brevet français FR-A-2687628 déposée le 24 février 1992 par la Demanderesse.

Ces moyens de blocage sont en effet montés déplaçables entre une position de verrouillage et une position de déverrouillage par l'intermédiaire de moyens d'assistance par exemple à moteur électrique dont l'alimentation en énergie est pilotée par un organe de commande actionnable par l'utilisateur.

Dans l'exemple de réalisation représenté, -les moyens de blocage désignés par la référence générale 20 sont reliés par un mécanisme à bielle-manivelle 21, à l'arbre de sortie 22 d'un moteur électrique 23 dont le fonctionnement est déclenché par un organe de commande actionnable par l'utilisateur (non représenté).

L'arbre de sortie 22 du moteur est associé à une bielle 24 montée déplaçable à coulissement dans une lumière 25a d'une manivelle 25 et cet arbre de sortie du moteur entraîne également deux parties en saillie en forme de came 26 et 27, adaptées pour coopérer avec un organe de fin de course 28, pour contrôler le cycle de fonctionnement du moteur.

On conçoit alors que si l'on intégre cet organe de commande actionnable par l'utilisateur et disposé par exemple sur le volant ou sur le tableau de bord du véhicule et cet organe de fin de course 28, dans le circuit représenté sur la Fig.1, toute action de l'utilisateur sur l'organe de commande provoque le déclenchement d'un cycle de fonctionnement au cours duquel le moteur 23 entraînant en rotation son arbre de sortie 22, provoque le déplacement d'une part du mécanisme à bielle-manivelle et donc des moyens de blocage entre leurs deux positions et d'autre part des parties en saillie en forme de came 26,27. Ce déplacement de la came 26 provoque la libération de l'organe de fin de course et le fonctionnement de l'ensemble est alors analogue à ce qui a été décrit en regard de la Fig.1, c'est-à-dire que le cycle de rotation du moteur se poursuit tant que la came 27 n'est pas venue appuyer sur l'organe de fin de course 28 et provoquer son déplacement vers une position ouverte d'arrêt du cycle.

Ceci permet par exemple de faire passer les moyens de blocage de leur position de verrouillage dans leur position de déverrouillage, permettant à l'utilisateur de régler en position la colonne de direction.

Une fois ce réglage réalisé, une nouvelle action de l'utilisateur sur l'organe de commande provoque le déclenchement d'un nouveau cycle d'activation du moteur de manière analogue à ce qui a déjà été décrit, et celui-ci tourne alors par exemple dans le même sens, jusqu'à ce que la surface de came 26 vienne à nouveau actionner l'organe de fin de course 28, les moyens de blocage étant entraînés vers leur position de verrouillage par le mécanisme à bielle-manivelle.

Les actions de l'utilisateur sur l'organe de commande se traduisent par le déclenchement d'un cycle de verrouillage ou de déverrouillage des moyens de blocage, dans les conditions décrites en regard de la Fig.1, c'est à dire que l'utilisateur ne peut déclencher qu'un seul cycle de fonctionnement, de verrouillage ou de déverrouillage des moyens de blocage, par action sur l'organe de commande.

Bien entendu, d'autres modes de réalisation de ces moyens d'assistance au déplacement de ces moyens de blocage peuvent être envisagés comme cela a été décrit dans la demande française mentionnée précédemment.

Cependant, le mode de réalisation décrit précédemment présente l'avantage d'utiliser un moteur électrique à un seul sens de rotation, le mécanisme à bielle-manivelle permettant de convertir la rotation du moteur en déplacements des moyens de blocage entre leurs positions de verrouillage et de déverrouillage et inversement.

## Revendications

1. Dispositif de commande d'un cycle d'activation d'un actionneur (1) du type comportant un organe (2) à action fugitive de déclenchement du cycle, déplaçable entre une position ouverte de repos et une position fermée de déclenchement du cycle et un organe (3) de fin de course, associé à l'actionneur (1) et déplaçable entre une position ouverte d'arrêt du cycle et une position fermée de poursuite du cycle et des moyens (5) d'alimentation de l'actionneur (1) dont le fonctionnement est commandé par lesdits organes pour assurer l'alimentation ou non de l'actionneur en fonction de l'état de ceux-ci, caractérisé en ce que lesdits moyens d'alimentation comprennent des moyens (6) de déclenchement du cycle associés à l'organe de déclenchement de cycle (2) et comprenant des moyens (7) de court-circuitage de l'organe (3) de fin de course et des moyens (8) d'inhibition des moyens de déclenchement (6) après passage de l'organe de fin de course (3) de sa position ouverte d'arrêt du cycle à sa position fermée de poursuite du cycle, la réinitialisation de ces moyens d'inhibition (8) étant commandée par passage de l'organe de fin de course (3) de sa position fermée de poursuite de cycle à sa position ouverte d'arrêt de cycle et relâchement de l'organe de déclenchement (2).

2. Dispositif de commande selon la revendication 1, caractérisé en ce que les moyens d'alimentation (5) comprennent un premier relais (9) de manoeuvre d'un organe d'alimentation (10) de l'actionneur (1), ce relais (9) étant connecté en série avec l'organe de fin de course (3) et les moyens de court-circuitage (7) de ceux-ci, et en ce que les moyens de déclenchement (6) comprennent un second relais (11) à auto-alimentation, de manoeuvre des moyens de court-circuitage (7), ce second relais étant connecté en série avec l'organe de déclenchement (2).

3. Dispositif de commande selon la revendication 2, caractérisé en ce que l'organe d'alimentation (10) de l'actionneur (1) est un commutateur à deux positions, l'une d'alimentation de l'actionneur et l'autre de mise en court-circuit de celui-ci.

4. Dispositif de commande selon l'une quelconque des revendications 2 ou 3, caractérisé en ce que les moyens d'inhibition (8) comprennent un condensateur (12) en série avec le second relais (11), une résistance de décharge (13) de ce condensateur, en parallèle aux bornes du condensateur et du second relais et une diode de roue libre (14) en parallèle sur le second relais, l'une des bornes de ce condensateur étant reliée à la borne de sortie de l'organe de déclenchement (2) et à la borne de sortie commune de l'organe de fin de course (3) et des moyens de court-circuitage (7) de ceux-ci à travers une diode (15) montée en inverse.

5. Dispositif de commande selon l'une quelconque des revendications précédentes, caractérisé en ce que l'actionneur (1) est un moteur électrique.

6. Dispositif de commande selon l'une quelconque des revendications précédentes, caractérisé en ce qu'un voyant (16) est connecté en parallèle aux bornes de l'actionneur.

7. Ensemble de colonne de direction réglable en position pour véhicule automobile, du type comportant des moyens (20) de blocage de la colonne en position, déplaçables entre une position de verrouillage et une position de déverrouillage par l'intermédiaire d'un moteur électrique ( 23) dont l'arbre de sortie (22) est relié aux moyens de blocage par des moyens d'actionnement (24,25) et dont l'alimentation en énergie est pilotée par un organe de commande, caractérisé en ce qu'il comporte un dispositif de commande d'un cycle d'activation dudit moteur selon l'une quelconque des revendications précédentes.

8. Ensemble de colonne de direction selon la revendication 7, caractérisé en ce que les moyens d'actionnement sont des moyens d'actionnement à bielle-manivelle (21).

9. Ensemble de colonne de direction selon la revendication 8, caractérisé en ce que le moteur est un moteur à un seul sens de rotation, ladite bielle (24) étant reliée à l'arbre de sortie du moteur (23) et montée déplaçable à coulissement dans une lumière (25a) de la manivelle (25) qui est reliée aux moyens de blocage (20).

10. Ensemble de colonne de direction selon la revendication 7,8 ou 9, caractérisé en ce que ledit arbre de sortie du moteur entraîne deux parties en saillie en forme de came (26, 27) adaptées pour coopérer avec un organe de fin de course (28) pour contrôler l'arrêt du cycle d'activation du moteur.

## Claims

1. Device for controlling an activation cycle of an actuator 1) of the type comprising a device (2) having a transitory action of triggering the cycle, displaceable between an open position of rest and a closed position of triggering the cycle and an end of travel device (3), associated with the actuator (1) and displaceable between an open position of stopping the cycle and a closed position of continuing the cycle and means (5) of supplying power to the actuator (1) whose functioning is controlled by the said devices in order to provide or not provide the power supply to the actuator according to the state of these devices, characterized in that the said power supply means comprise means (6) of triggering the cycle associated with the cycle triggering device (2) and comprising means (7) of short-circuiting the end of travel device (3) and means (8) of inhibiting the triggering means (6) after the passage of the end of travel device (3) from its open position of stopping the cycle to its closed position of continuing the cycle, the reinitialisation of these inhibiting means (8) being controlled by the passage of the end of travel device (3) from its closed position of continuing the cycle to its open position of stopping the cycle and the release of the triggering device (2).

2. Control device according to Claim 1, characterized in that the power supply means (5) comprise a first relay (9) for operating a device (10) for supplying power to the actuator (1), this relay (9) being connected in series with the end of travel device (3) and the cleans (7) of short-circuiting the latter, and in that the triggering means (6) comprise a second self-powered relay (11) for operating the short-circuiting means (7), this second relay being connected in series with the triggering device (2).

3. Control device according to Claim 2, characterized in that the power supply device (10) of the actuator (1) is a two-position switch, one position for supplying power to the actuator and the other position for short-circuiting the latter.

4. Control device according to any one of Claims 2 or 3, characterized in that the inhibiting means (8) comprise a capacitor (12) in series with the second relay (11), a discharge resistor (13) for this capacitor, in parallel with the terminals of the capacitor and the second relay and a free wheel diode (14) in parallel with the second relay, one of the terminals of this capacitor being connected to the output terminal of the triggering device (2) and to the common output terminal of the end of travel device (3) and of the means (7) of short-circuiting the latter via a backward-connected diode (15).

5. Control device according to any one of the preceding claims, characterized in that the actuator (1) is an electric motor.

6. Control device according to any one of the preceding claims, characterized in that an indicator lamp (16) is connected in parallel with the terminals of the actuator.

7. Adjustable position steering column assembly for a motor vehicle, of the type comprising means (20) of locking the column in position, displaceable between a locked position and an unlocked position by the intermediary of an electric motor (23) whose output shaft (22) is connected to the locking means by actuating means (24, 25) and whose power supply is controlled by a control device, characterized in that it comprises a device for controlling an activation cycle of the said motor according to any one of the preceding claims.

8. Steering column assembly according to Claim 7, characterized in that the actuating means are rod-crank actuating means (21)

9. Steering column assembly according to Claim 8, characterized in that the motor is a motor with only one direction of rotation, the said rod (24) being connected to the output shaft of the motor (23) and mounted so that it is displaceable in a slot (25a) in the crank (25) which is connected to the locking means (20).

10. Steering column assembly according to Claim 7, 8 or 9, characterized in that the said output shaft of the motor drives two protruding cam-shaped parts (26, 27) adapted to cooperate with an end of travel device (28) in order to control the stopping of the motor activation cycle.

## Patentansprüche

1. Vorrichtung zur Steuerung eines Zyklus der Aktivierung eines Stellglieds (1), die folgendes aufweist: ein Organ (2) mit unbeständiger Zyklusauslösewirkung, das zwischen einer offenen Ruhestellung und einer geschlossenen Zyklusauslösestellung beweglich ist, ein dem Stellglied (1) zugeordnetes Endschaltorgan (3), das zwischen einer offenen Zyklusunterbrechungsstellung und einer geschlossenen Zyklusablaufstellung beweglich ist, und Einrichtungen (5) zur Versorgung des Stellglieds (1), deren Betrieb durch diese Organe gesteuert wird, um das Stellglied in Abhängigkeit von ihrem Zustand zu versorgen oder nicht, dadurch gekennzeichnet, daß die Versorgungseinrichtungen Zyklusauslöseeinrichtungen (6) aufweisen, die dem Zyklusauslöseorgan (2) zugeordnet sind und Einrichtungen (7) zum Kurzschließen des Endschaltorgans (3) und Einrichtungen (8) zum Hemmen der Auslöseeinrichtungen (6) nach Übergang des Endschaltorgans (3) aus seiner offenen Zyklusunterbrechungsstellung in seine geschlossene Zyklusablaufstellung aufweisen, wobei die Rückstellung dieser Hemmeinrichtungen (8) durch den Übergang des Endschaltorgans (3) aus seiner geschlossenen Zyklusablaufstellung in seine offene Zyklusunterbrechungsstellung und Loslassen des Auslöseorgans (2) bewirkt wird.

2. Steuervorrichtung nach Anspruch 1, dadurch gekennzeichnet, daß die Versorgungseinrichtungen (5) ein erstes Relais (9) zur Betätigung eines Versorgungsorgans (10) des Stellglieds (1) aufweisen, wobei dieses Relais (9) mit dem Endschaltorgan (3) und den Einrichtungen (7) zu dessen Kurzschließung in Reihe geschaltet ist, und daß die Auslöseeinrichtungen (6) ein zweites Relais (11) mit Selbstversorgung zur Betätigung der Kurzschließeinrichtungen (7) aufweisen, wobei dieses zweite Relais mit dem Auslöseorgan (2) in Reihe geschaltet ist.

3. Steuervorrichtung nach Anspruch 2, dadurch gekennzeichnet, daß das Versorgungsorgan (10) des Stellglieds (1) ein Umschalter mit zwei Stellungen ist, in deren einen das Stellglied versorgt und in deren anderen es kurzgeschlossen ist.

4. Steinervorrichtung nach einem der Ansprüche 2 und 3, dadurch gekennzeichnet, daß die Hemmeinrichtungen (8) einen Kondensator (12), der mit dem zweiten Relais (11) in Reihe geschaltet ist, einen Widerstand (13) zur Entladung dieses Kondensators, der zu den Anschlüssen des Kondensators und des zweiten Relais parallel geschaltet ist, und eine zu dem zweiten Relais parallelgeschaltete Freilaufdiode (14) aufweisen wobei einer der Anschlüsse diesem Kondensators mit dem Ausgangsanschluß des Auslöseorgans (2) und mit dem gemeinsamen Ausgangsanschluß des Endschaltorgans (3) und der Einrichtungen (7) zu deren Kurzschließung über eine umgekehrt geschaltete Diode (15) verbunden ist.

5. Steuervorrichtung nach einem der vorhergehenden Ansprüche, dadurch gekennzeichnet, daß das Stellglied (1) ein Elektromotor ist.

6. Steuervorrichtung nach einem der vorhergehenden Ansprüche, dadurch gekennzeichnet, daß eine Anzeigelampe (16) zu den Anschlüssen des Stellglieds parallelgeschaltet ist.

7. Verstellbare Lenksäuleneinheit für Kraftfahrzeug, die Einrichtungen (20) zur Blockierung der Lenksäule in ihrer Stellung aufweist, die zwischen einer Verriegelungsstellung und einer Entriegelungsstellung über einen Elektromotor (23) beweglich sind, dessen Ausgangswelle (22) mit den Blockiereinrichtungen durch Betätigungseinrichtungen (24, 25) verbunden ist und dessen Energieversorgung durch ein Steuerorgan gesteuert ist, dadurch gekennzeichnet, daß sie eine Vorrichtung zur Steuerung eines Zyklus der Aktivierung dieses Motors nach einem der vorhergehenden Ansprüche aufweist.

8. Lenksäuleneinheit nach Anspruch 7, dadurch gekennzeichnet, daß die Betätigungseinrichtungen Betätigungseinrichtungen (21) mit Pleuel und Kurbel sind.

9. Lenksäuleneinheit nach Anspruch 8, dadurch gekennzeichnet, daß der Motor ein Motor mit nur einer Drehrichtung ist, wobei das Pleuel (24) mit der Ausgangswelle des Motors (23) verbunden ist und in einem Schlitz (25a) der mit den Blockiereinrichtungen (20) verbundenen Kurbel (25) verschiebbar ist.

10. Lenksäuleneinheit nach Anspruch 7, 8 oder 9, dadurch gekennzeichnet, daß die Ausgangswelle des Motors zwei vorstehende, nockenförmige Teile (26, 27) antreibt, die dafür ausgelegt sind, mit einem Endschaltorgan (28) zusammenzuwirken, um die Unterbrechung des Motoraktivierungszyklus zu steuern.
